(19) Europäisches Patentamt
European Patent Office
Office européen des brevets

(11) EP 1 754 767 B1

(12) **EUROPEAN PATENT SPECIFICATION**

(45) Date of publication and mention
of the grant of the patent:
**18.06.2014  Bulletin 2014/25**

(51) Int Cl.:
**C09K 11/07** [(2006.01)]

(21) Application number: **05736883.9**

(22) Date of filing: **22.04.2005**

(86) International application number:
**PCT/JP2005/008266**

(87) International publication number:
**WO 2005/103196 (03.11.2005 Gazette 2005/44)**

(54) **CHEMILUMINESCENT COMPOSITIONS**

CHEMILUMINESZIERENDE ZUSAMMENSETZUNGEN

COMPOSITIONS CHIMILUMINESCENTES

(84) Designated Contracting States:
**AT BE BG CH CY CZ DE DK EE ES FI FR GB GR
HU IE IS IT LI LT LU MC NL PL PT RO SE SI SK TR**

(30) Priority: **27.04.2004   JP 2004131256**

(43) Date of publication of application:
**21.02.2007   Bulletin 2007/08**

(73) Proprietor: **Lumica Corporation
Koga-shi,
Fukuoka 811-3136 (JP)**

(72) Inventors:
• **FUJITA, Masahiko
Fukuoka 8113136 (JP)**

• **YAMATE, Tetsuro
Fukuoka 8113136 (JP)**

(74) Representative: **Wibbelmann, Jobst et al
Wuesthoff & Wuesthoff
Patent- und Rechtsanwälte
Schweigerstrasse 2
81541 München (DE)**

(56) References cited:
**WO-A1-94/19421      JP-B2- 53 047 798
US-A- 3 701 738      US-A- 3 749 679
US-A- 3 893 938**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

Technical Field

The present invention relates to a chemiluminescent composition as deined in the claims for increasing the luminance of luminescent units used in fishing, events, and toys.

Background Art

The previously known technology described in Japanese Examined Patent Application Publication No. 53-47798 relates to the use of a specific luminescent compound in order to attain chemiluminescence exhibiting an excellent quantum yield and the highest intensity.

US3749679 (A) discloses a composition intended to be reacted with hydrogen peroxide in the presence of an organic solvent, wherein said composition comprises a specific compound which can e.g. be a bis(phenyl)oxalate ester derivative.

US 3,701,738 discloses a chemiluminescent composition for reaction with a hydroperoxide to obtain chemiluminescent light, wherein said composition comprises (1) a specific ester, (2) rubrene and substituted derivatives thereof and (3) an organic solvent.

US 3,893,938 discloses an article of manufacture comprising a substrate in sheet form having incorporated therewith a chemiluminescent component comprising a bis-ester of oxalic acid, said substrate being inert to said component.

The mechanism of chemiluminescence reaction of a general oxalic ester can be divided into the following three stages.

(1) oxalic ester + hydrogen peroxide → cyclic oxide (intermediate)
(2) cyclic oxide (intermediate) + luminophor → excited singlet luminophor
(3) excited singlet luminophor → luminophor + radiation ray

In theory, the luminescent compound is simply electronically excited by the transfer of chemical energy released through decomposition of the intermediate, and the luminescent compound itself is not decomposed. However, in every known example, it has been found that the luminescent compound is actually decomposed. Since hydrogen peroxide is dissolved in the same system, it is also believed that an influence is exerted by hydrogen peroxide. In order to make full use of all chemical energy, an adequate amount of luminophor must be present in consideration of the stage (2). However, this is limited by the solubility of the luminescent substance in the solvent system and the stability of the luminescent substance. In the above-described patent document, a chloro-, bromo-, or lower alkyl-substituted phenylethynyl-substituted aromatic compound has been proposed as a luminescent substance having an excellent solubility, excellent stability, and a high efficiency.

Consequently, it is believed that a high-luminance luminophor is attained in the presence of a catalyst and hydrogen peroxide in an amount adequate for the chemiluminescence reaction when the system is allowed to contain a high-concentration oxalic ester and a high-concentration luminescent compound both dissolved therein. However, it has been found that the chemiluminescence efficiency is decreased as the oxalic ester concentration is increased because luminescence is quenched by an unreacted oxalic ester. Therefore, some of the energy useful in the luminescence is lost through a process not causing radiation. Consequently, the concentration of the oxalic ester is limited and, thereby, a chemiluminescent composition having a higher luminance and a longer life cannot be provided.

Disclosure of Invention

As a result of market research, time periods when the most intensive light is required of event luminescence tools and luminescence toys are up to about 3 hours to 4 hours from the start of luminescence. Accordingly the present invention provides a chemiluminescent composition exhibiting a luminance which is significantly increased during the above-described time period. Furthermore, the duration of luminescence tools for fishing at night is desired to be 5 hours to 6 hours. However, as a matter of course, the luminescence time may be 6 hours or more, and the luminescence time is not limited.

Examples of oxalic esters used in the present invention include bis(2,4,5-trichloro-carbobutoxyphenyl)oxalate, bis(2,4,5-trichloro-carboisopentyloxyphenyl)oxalate, bis(6-(butylmonoglycoxycarbonyl)-2,4,5-trichlorophenyl)oxalate, and bis(2,4,5-trichloro-carbopentoxyphenyl)oxalate (hereafter abbreviated as CPPO). The present invention will be described with reference to CPPO that is widely used now.

Various types of luminescent substances have been disclosed in the above-described document and other documents. Examples of anthracene based luminescent substances include bisphenylethynylanthracene (BPEA), 2-ethyl-bisphenylethynylanthracene (2-EtBPEA), 1,8-dichloro-bisphenylethynylanthracene (1,8-dcBPEA), 1-chloro-bisphenylethynylanthracene (1-cBPEA), and 2-chloro-bisethoxyphenylanthracene (2-cBEPA). Examples of perylene based luminescent substances include many types, e.g., 1,6,7,12-tetraphenoxy-N,N'-bis(2,6-diisopropylphenyl)-3,4,9,10-perylenedicarboxyimide (trade name: lumogen red) and lumogen orange (trade name).

For catalysts, various types of bases, e.g., tetrabutylammonium salicylate (TBAS), sodium salicylate, and sodium benzoate, are known.

Examples of solvents include phthalic acid esters, benzyl benzoate, butyl benzoate, acetyl citrate, ethylene glycol monobutyl ether acetate, diethylene glycol monobutyl ether acetate, and t-butanol. These solvents have mutually different solubilities for CPPO, and at least two types thereof may be combined.

The components of the chemiluminescent composition of the present invention are not limited to those described above. Examples of known chemiluminescent compositions include the following compositions.

Composition A-1

The composition is prepared by adding and dissolving 0.16 mol of CPPO and $7.4 \times 10^{-3}$ mol of 1-cBPEA into dibutyl phthalate.

Composition B-1

The composition is prepared by mixing 400 milliliter (cc) of dimethyl phthalate and 100 milliliter (cc) of t-butanol, adding 35 g of 85% aqueous hydrogen peroxide thereto, and further adding and dissolving 0.0008 mol of sodium salicylate into the resulting mixture.

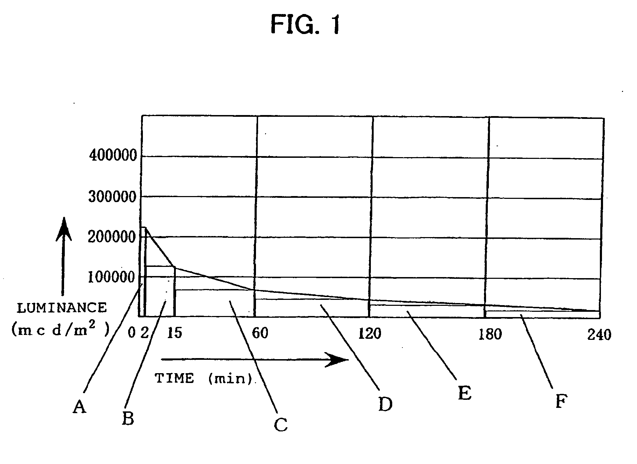

A method for measuring the luminescence capacity and the luminous efficacy is shown in Fig. 1.

The measuring apparatus is Minolta Luminance Meter ($mcd/m^2$) and the measurement temperature is 23°C. Hereafter, the condition is the same.

A total area of A, B, C, D, E, and F (4 hours) in the above-described Fig. 1 is taken as a luminescence capacity V4. The luminescence capacity V4 is converted to a value per mole of oxalic ester, and the resulting value is taken as a luminous efficacy X.

Measurement of luminescence

The luminescence is effected by adding 0.42 ml of Composition B-1 to 0.84 ml of Composition A-1.

Table 1

|  | 2 minutes | 15 minutes | 60 minutes | 120 minutes | 180 minutes | 240 minutes | 300 minutes | 360 minutes |
|---|---|---|---|---|---|---|---|---|
| A-1, B-1 | 117100 | 66535 | 47615 | 38815 | 31250 | 24235 | 17255 | 12126 |

```
2/60 × 117100 + 13/60 × 66535 + 45/60 × 47615 + 38815 +

31250 + 24235 = 148330
```

```
148330/0.16 = 927063
```

For the known Composition A-1 and Composition B-1, the luminescence capacity V4 is 148330 $mcd/m^2$/hour, and the luminous efficacy X is 927063 $mcd/m^2$/hour/mol.

The purpose of the present invention is to minimize a reduction in luminous efficacy and to attain a composition exhibiting the luminance increased by 30% or more, desirably by about 50% or more as compared with the luminance of a known composition.

Therefore, the target of the total luminescence capacity V4 is 192829 $mcd/m^2$/hour to 222495 $mcd/m^2$/hour.

Attempt to increase the luminance by increasing the concentration of reaction substance

The reaction substance is added in such a way that the CPPO concentration of the composition reaches three times the known concentration, 0.16 mol, and accompanying that, the concentration of the luminescent substance is increased correspondingly.

A composition in which the concentrations of CPPO and the luminescent substance have been increased by using butyl benzoate that is a solvent having a good solubility for CPPO is subjected to the measurement.

Composition A-2

A-2-1 A composition was prepared by adding and dissolving 0.16 mol of CPPO and $7.4 \times 10^{-3}$ mol of 1-cBPEA into butyl benzoate.

A-2-2 A composition was prepared by adding and dissolving 0.19 mol of CPPO and $8.9 \times 10^{-3}$ mol of 1-cBPEA into butyl benzoate.

A-2-3 A composition was prepared by adding and dissolving 0.24 mol of CPPO and $11.1 \times 10^{-3}$ mol of 1-cBPEA into butyl benzoate.

A-2-4 A composition was prepared by adding and dissolving 0.32 mol of CPPO and $14.8 \times 10^{-3}$ mol of 1-cBPEA into butyl benzoate.

A-2-5 A composition was prepared by adding and dissolving 0.40 mol of CPPO and $18.5 \times 10^{-3}$ mol of 1-cBPEA into butyl benzoate.

A-2-6 A composition was prepared by adding and dissolving 0.48 mol of CPPO and $22.2 \times 10^{-3}$ mol of 1-cBPEA into butyl benzoate.

Composition B-2

The composition is prepared by mixing 400 ml (cc) of dimethyl phthalate and 100 ml (cc) of t-butanol, adding 35 g of 85% aqueous hydrogen peroxide thereto, and further adding and dissolving 0.001 mol of TBAS into the resulting mixture.

Measurement of luminescence

A composition (not according to the invention) is prepared by adding 0.42 ml of Composition B-2 to 0.84 ml of one of Compositions A-2-1 to A-2-6, and luminescence is effected.

Table 2

|       | 2 minutes | 15 minutes | 60 minutes | 120 minutes | 180 minutes | 240 minutes | 300 minutes | 360 minutes |
|-------|-----------|------------|------------|-------------|-------------|-------------|-------------|-------------|
| A-2-1 | 145115    | 82020      | 58440      | 46123       | 34512       | 18670       | 4229        | 434         |
| A-2-2 | 181908    | 94825      | 63289      | 48262       | 37424       | 24525       | 9122        | 1691        |
| A-2-3 | 201651    | 102150     | 55393      | 42271       | 35175       | 30015       | 22655       | 12707       |
| A-2-4 | 206669    | 102250     | 51639      | 36057       | 27620       | 24520       | 19940       | 15731       |
| A-2-5 | 233864    | 94165      | 48661      | 33096       | 25974       | 20440       | 16135       | 14264       |
| A-2-6 | 231566    | 86295      | 46328      | 29939       | 22064       | 16510       | 12130       | 10815       |

Measurement results

Table 3

A-2-1    Luminescence capacity V4 = 165743 mcd/m$^2$/hour
Luminous efficacy X = 1035891 mcd/m$^2$/hour/mol

A-2-2    Luminescence capacity V4 = 184286 mcd/m$^2$/hour
Luminous efficacy X = 969925 mcd/m$^2$/hour/mol

A-2-3    Luminescence capacity V4 = 177860 mcd/m$^2$/hour
Luminous efficacy X = 741083 mcd/m$^2$/hour/mol

A-2-4    Luminescence capacity V4 = 155970 mcd/m$^2$/hour
Luminous efficacy X = 487405 mcd/m$^2$/hour/mol

(continued)

| | | |
|---|---|---|
| A-2-5 | Luminescence capacity V4 = 144203 mcd/m$^2$/hour | |
| | Luminous efficacy X = 360507 mcd/m$^2$/hour/mol | |
| A-2-6 | Luminescence capacity V4 = 129675 mcd/m$^2$/hour | |
| | Luminous efficacy X = 270156 mcd/m$^2$/hour/mol | |

Discussion on the case where the concentrations of CPPO and the luminescent substance are increased by using butyl benzoate as a solvent

The largest luminescence capacity V4, 184286 mcd/m$^2$/hour, is exhibited by A-2-2

The largest luminous efficacy X is exhibited by A-2-1

From the viewpoint of the luminous efficacy X, the luminescence is inhibited as a result of an increase in CPPO. The above-described tendency becomes significant as the concentration is increased. The same holds true for the luminescence capacity.

As described above, for the known Composition A-1 and the Composition B-1, the luminescence capacity V4 is 148330 mcd/m$^2$/hour, and the luminous efficacy X is 927063 mcd/m$^2$/hour/mol. Therefore, the above-described composition does not satisfy the value 192829 mcd/m$^2$/hour which is 30%

or more of the luminescence capacity V4.

As is clear from this result, luminescence with high luminance cannot be attained by simply increasing the concentration.

Then, CPPO and the luminescent substance both in a powder state are further added to the known Composition A-1. The luminance of the composition in which an oxalic ester and a luminescent substance are present in a solid state in a solution containing dissolved oxalic ester and luminescent substance was measured under the following formulation.

Composition A-3

A-3-1 The solution of A-1

A-3-2 A composition is prepared by adding 0.0184 g of CPPO and 0.55 mg of 1-cBPEA both in a powder state to 0.83 ml of the solution of A-1.

A-3-3 A composition is prepared by adding 0.0456 g of CPPO and 1.37 mg of 1-cBPEA both in a powder state to 0.81 ml of the solution of A-1.

A-3-4 A composition is prepared by adding 0.090 g of CPPO and 2.7 mg of 1-cBPEA both in a powder state to 0.77 ml of the solution of A-1.

A-3-5 A composition is prepared by adding 0.136 g of CPPO and 4.07 mg of 1-cBPEA both in a powder state to 0.74 ml of the solution of A-1.

A-3-6 A composition is prepared by adding 0.181 g of CPPO and 5.42 mg of 1-cBPEA both in a powder state to 0.70 ml of the solution of A-1.

Measurement of luminescence

A composition is prepared by adding 0.42 ml of Composition B-2 to 0.84 ml of one of Compositions A-3-1 to A-3-6, and luminescence is effected.

Table 4

| | 2 minutes | 15 minutes | 60 minutes | 120 minutes | 180 minutes | 240 minutes | 300 minutes | 360 minutes |
|---|---|---|---|---|---|---|---|---|
| A-3-1 | 158568 | 98864 | 75760 | 52245 | 31250 | 8811 | 741 | 72 |
| A-3-2 | 237028 | 132403 | 75360 | 53465 | 39510 | 19210 | 3731 | 301 |
| A-3-3 | 306831 | 145049 | 77350 | 52990 | 39420 | 27540 | 16100 | 4605 |
| A-3-4 | 362642 | 155409 | 82045 | 51060 | 39735 | 30780 | 28115 | 18175 |
| A-3-5 | 382058 | 142358 | 74355 | 49315 | 37256 | 29960 | 28460 | 21260 |
| A-3-6 | 391480 | 134832 | 77810 | 46495 | 34790 | 27985 | 23325 | 19610 |

Measurement results

Table 5

| A-3-1 | Luminescence capacity V4 = 175832 mcd/m$^2$/hour |
| | Luminous efficacy X = 1098951 mcd/m$^2$/hour/mol |
| A-3-2 | Luminescence capacity V4 = 205293 mcd/m$^2$/hour |
| | Luminous efficacy X = 1069235 mcd/m$^2$/hour/mol |
| A-3-3 | Luminescence capacity V4 = 219618 mcd/m$^2$/hour |
| | Luminous efficacy X = 915073 mcd/m$^2$/hour/mol |
| A-3-4 | Luminescence capacity V4 = 228869 mcd/m$^2$/hour |
| | Luminous efficacy X = 715215 mcd/m$^2$/hour/mol |
| A-3-5 | Luminescence capacity V4 = 215876 mcd/m$^2$/hour |
| | Luminous efficacy X = 539689 mcd/m$^2$/hour/mol |
| A-3-6 | Luminescence capacity V4 = 209890 mcd/m$^2$/hour |
| | Luminous efficacy X = 437272 mcd/m$^2$/hour/mol |

Discussion on the composition in which CPPO and the luminescent substance are present in a solid state in a solution containing dissolved oxalic ester and luminescent substance
Comparisons are made with the above-described high-concentration solutions A-2-2 to A-2-6.

Table 6

A-2-2 Luminescence capacity V4 = 184286 A-3-2 Luminescence capacity V4 = 205293 11% up
A-2-3 Luminescence capacity V4 = 177860 A-3-3 Luminescence capacity V4 = 219618 23% up
A-2-4 Luminescence capacity V4 = 155970 A-3-4 Luminescence capacity V4 = 228869 46% up
A-2-5 Luminescence capacity V4 = 144203 A-3-5 Luminescence capacity V4 = 215876 49% up
A-2-6 Luminescence capacity V4 = 129675 A-3-6 Luminescence capacity V4 = 209890 61% up

Even when the contents of CPPO and the luminescent substance are equal to those in A-2-2 to A-2-6, the luminescence capacities are increased by 40% to 50%.
The reason the luminescence capacity of the system in which CPPO and the luminescent substance are present in a solid state is improved as compared with that of the high-concentration system is believed that the oxalic ester in the state of small crystals present in the oxalic ester solution is dispersed in the solution, the chemiluminescence reaction is effected on the surfaces of the dispersed solid and, thereby, the luminance is increased by a synergistic effect with the chemiluminescence reaction effected simultaneously in the solution. Alternatively, it is believed that the solid oxalic ester is dissolved and contributes to the luminescence as the oxalic ester is consumed. In the case where the solubility of the oxalic ester is low, the oxalic ester in the state of powder or small crystals is allowed to present in the solution, and the luminescent unit is shaken when it is used, so that the oxalic ester is dissolved into the solvent in the reaction system and contributes to the luminescence.
The luminescence capacity up to a lapse of 4 hours is described above. A luminescence capacity V6 up to a lapse of 6 hours will be described below.

Table 7

| A-3-1 | Luminescence capacity V6 = 176645 mcd/m$^2$/hour |
| | Luminous efficacy X = 1104029 mcd/m$^2$/hour/mol |
| A-3-2 | Luminescence capacity V6 = 209325 mcd/m$^2$/hour |
| | Luminous efficacy X = 1090233 mCd/m$^2$/hour/mol |
| A-3-3 | Luminescence capacity V6 = 240322 mcd/m$^2$/hour |
| | Luminous efficacy X = 1001342 mcd/m$^2$/hour/mol |
| A-3-4 | Luminescence capacity V6 = 275159 mcd/m$^2$/hour |
| | Luminous efficacy X = 859871 mcd/m$^2$/hour/mol |
| A-3-5 | Luminescence capacity V6 = 265596 mcd/m$^2$/hour |
| | Luminous efficacy X = 663989 mcd/m$^2$/hour/mol |

(continued)

A-3-6    Luminescence capacity V6 = 252825 mcd/m$^2$/hour
         Luminous efficacy X = 526720 mcd/m$^2$/hour/mol

The largest luminescence capacity V4 (Table 5), 228869 mcd/m$^2$/hour, is exhibited by A-3-4 The largest luminous efficacy X is exhibited by A-3-1 From the viewpoint of the luminous efficacy X, the luminescence is inhibited by an increase in CPPO, as a result. The above-described tendency becomes significant as the concentration is increased (the degree of reduction in luminescence is smaller than those for A-2-2 to A-2-6). However the luminescence capacity is hardly reduced. The luminescence capacity V up to 6 hours is slightly improved as compared with the luminescence capacity V up to 4 hours. As described above, for the known Composition A-1 and the Composition B-1, the luminescence capacity V4 is 148330 mcd/m$^2$/hour. Therefore, the luminescence capacity V4 of the composition of A-3-4 is increased by [64%] 54%, and this is a satisfactory result. From the viewpoint of the luminescence capacity up to 6 hours, the value is improved as the concentration is increased. This is because the luminance is maintained even after a lapse of 4 hours. From the above-described results, the compositions of A-3-2 and A-3-3 are suitable for a short-time (3 hours) use, and the compositions of A-3-4, A-3-5, and A-3-6 are suitable for a long-time (6 hours) use. According to a general judgment in consideration of the luminescence time, the luminescence capacity, and the luminous efficacy, A-3-4 seems to be most suitable. The CPPO content of A-3-4 is 0.32 mol.

In order to calculate the luminescence capacity based on the area along the luminance curve, the areas of triangles on B, C, D, E, and F shown in Fig. 1 are summed. The luminescence capacity V4* of the known Composition A-1 and Composition B-1 results in 148330 + 13/60 × (117100 - 66535) × 1/2 + 45/60 × (66535 - 47615) × 1/2 + (47615 - 38815) × 1/2 + (38815 - 31250) × 1/2 + (31250 - 24235) × 1/2 = 172592 mcd/m$^2$/hour. Likewise, the luminescence capacity V4* of A-3-4 results in 304463 mcd/m$^2$/hour and, therefore, a significant increments of about 76% is attained.

Discussion on luminescent substance

As described above, an adequate amount of luminescent substance must be present in order to make full use of all chemical energy in consideration of the stage (2). However, it is useless to add more than necessary. The data thereof are as described below.

A-4-1 A composition is prepared by adding 0.090 g of CPPO and 0.52 mg of 1-cBPEA both in a powder state to 0.77 ml of the solution of A-1.
A-4-2 A composition is prepared by adding 0.090 g of CPPO and 1.04 mg of 1-cBPEA both in a powder state to 0.77 ml of the solution of A-1.
A-4-3 A composition is prepared by adding 0.090 g of CPPO and 1.56 mg of 1-cBPEA both in a powder state to 0.77 ml of the solution of A-1.
A-4-4 A composition is prepared by adding 0.090 g of CPPO and 2.08 mg of 1-cBPEA both in a powder state to 0.77 ml of the solution of A-1.
A-4-5 A composition is prepared by adding 0.090 g of CPPO and 2.60 mg of 1-cBPEA both in a powder state to 0.77 ml of the solution of A-1.

Table 8

|       | 2 minutes | 15 minutes | 60 minutes | 120 minutes | 180 minutes | 240 minutes | 300 minutes | 360 minutes |
|-------|-----------|------------|------------|-------------|-------------|-------------|-------------|-------------|
| A-4-1 | 316600    | 149900     | 75470      | 54105       | 39545       | 32350       | 22646       | 16370       |
| A-4-2 | 335350    | 155500     | 75755      | 53120       | 39840       | 31680       | 25785       | 17615       |
| A-4-3 | 310450    | 152800     | 78640      | 53590       | 41110       | 34070       | 27030       | 19330       |
| A-4-4 | 328050    | 154950     | 75580      | 54615       | 42530       | 32795       | 26175       | 19715       |
| A-4-6 | 316800    | 148800     | 74545      | 53880       | 41845       | 32825       | 26660       | 21300       |

Table 9

A-4-1    Luminescence capacity V4 = 225634 mcd/m$^2$/hour
         Luminous efficacy X = 1375818 mcd/m$^2$/hour/mol

(continued)

| | |
|---|---|
| A-4-2 | Luminescence capacity V4 = 226326 mcd/m$^2$/hour |
| | Luminous efficacy X = 1380038 mcd/m$^2$/hour/mol |
| A-4-3 | Luminescence capacity V4 = 231205 mcd/m$^2$/hour |
| | Luminous efficacy X = 1409787 mcd/m$^2$/hour/mol |
| A-4-4 | Luminescence capacity V4 = 230833 mcd/m$^2$/hour |
| | Luminous efficacy X = 1407515 mcd/m$^2$/hour/mol |
| A-4-5 | Luminescence capacity V4 = 227259 mcd/m$^2$/hour |
| | Luminous efficacy X = 1385724 mcd/m$^2$/hour/mol |

For 1-cBPEA serving as a luminescent substance, A-4-3 exhibits the largest luminescence capacity and luminous efficacy. However, there is substantially no difference among A-4-2 to A-4-5. Therefore, it is adequate that about 0.010 to 0.015 mol of 1-cBPEA is present. If 0.015 mol or more is added, the luminance tends to be reduced. In the case where the solubility and the stability of the luminescent substance are low, the luminescent substance in the state of powder or small crystals is allowed to present in the solution, and the luminescent unit is shaken when it is used, so that the luminescent substance is dissolved into the solvent in the reaction system and contributes to the luminescence. That is, even when the luminescent substance is decomposed during proceeding of the chemiluminescence reaction, the luminescent substance present in a solid state is dissolved and, thereby, the shortage in the concentration of the luminescent substance can be compensated.

The case where the luminescent substance is lumogen red.

Composition A-8

Known composition of red luminescence

A solution containing 0.164 mol of CPPO, 0.00027 mol of 1-cBPEA, and 0.00139 mol of lumogen red is prepared from dibutyl phthalate.

A-8-1 Known red composition of A-8
A-8-2 A composition is prepared by adding and dissolving 0.00028 mol of lumogen red into 0.77 ml of the solution of A-8, and further adding 0.090 g of CPPO in a powder state.
A-8-3 A composition is prepared by adding and dissolving 0.00056 mol of lumogen red into 0.77 ml of the solution of A-8, and further adding 0.090 g of CPPO in a powder state.
A-8-4 A composition is prepared by adding and dissolving 0.00084 mol of lumogen red into 0.77 ml of the solution of A-8, and further adding 0.090 g of CPPO in a powder state.
A-8-5 A composition is prepared by adding and dissolving 0.0011 mol of lumogen red into 0.77 ml of the solution of A-8, and further adding 0.090 g of CPPO in a powder state.
A-8-6 A composition is prepared by adding and dissolving 0.00139 mol of lumogen red into 0.77 ml of the solution of A-8, and further adding 0.090 g of CPPO in a powder state.

A composition is prepared by adding 0.42 ml of Composition B-2 to 0.84 ml of one of Compositions A-7 and A-8-1 to A-8-6, and luminescence is effected.

Table 10

| | 2 minutes | 15 minutes | 60 minutes | 120 minutes | 180 minutes | 240 minutes | 300 minutes | 360 minutes |
|---|---|---|---|---|---|---|---|---|
| A-8-1 (not according to invention) | 21477 | 14318 | 8594 | 6092 | 4648 | 3683 | 2688 | 2175 |
| A-8-2 | 36629 | 19506 | 9345 | 7114 | 5903 | 4705 | 3434 | 2903 |
| A-8-3 | 39893 | 21977 | 10698 | 8170 | 6671 | 5458 | 4462 | 3658 |
| A-8-4 | 42999 | 23302 | 11205 | 8778 | 7008 | 5618 | 4336 | 3453 |
| A-8-5 | 46042 | 24466 | 12300 | 9218 | 7627 | 6222 | 5009 | 4066 |

(continued)

|  | 2 minutes | 15 minutes | 60 minutes | 120 minutes | 180 minutes | 240 minutes | 300 minutes | 360 minutes |
|---|---|---|---|---|---|---|---|---|
| A-8-6 | 49415 | 25810 | 12710 | 9878 | 7586 | 6174 | 4980 | 4056 |

Table 11

A-8-1    Luminescence capacity V4 = 24586 mcd/m$^2$/hour

Luminous efficacy X = 149915 mcd/m$^2$/hour/mol

A-8-2    Luminescence capacity V4 = 30178 mcd/m$^2$/hour

Luminous efficacy X = 92006 mcd/m$^2$/hour/mol

A-8-3    Luminescence capacity V4 = 34414 mcd/m$^2$/hour

Luminous efficacy X = 104921 mcd/m$^2$/hour/mol

A-8-4    Luminescence capacity V4 = 36189 mcd/m$^2$/hour

Luminous efficacy X = 110332 mcd/m$^2$/hour/mol

A-8-5    Luminescence capacity V4 = 39128 mcd/m$^2$/hour

Luminous efficacy X = 119293 mcd/m$^2$/hour/mol

A-8-6    Luminescence capacity V4 = 40410 mcd/m$^2$/hour

Luminous efficacy X = 123201 mcd/m$^2$/hour/mol

The current commercial product is the best composition from the viewpoint of the luminous efficacy. However, under the present circumstances, the price of CPPO has been reduced. When emphasis is laid on the luminescence capacity, V4 of the known product is 24586, 30% UP thereof is 31961, and 50% UP thereof is 36879. Therefore, A-8-3, A-8-4, and A-8-6 reach the target.
For lumogen red, the suitable concentration is 0.0025 mol to 0.0028 mol.

Measurement results

Some luminescent substances exhibit good efficiencies, and some luminescent substances exhibit poor efficiencies. Furthermore, they are mutually different in the solubility and the stability. Therefore, the concentration is not limited.

Discussion on catalyst

Although sodium salicylate is a good catalyst of the chemiluminescence reaction, it is not effective as described below.

Composition A-5

A composition is prepared by adding 0.09 g of CPPO in a powder state to 0.77 ml of solution in which 0.164 mol of CPPO and 14.8 mM of 1-cBPEA are dissolved in dibutyl phthalate.

Compositions

B-5-1. A composition is prepared by mixing 400 ml (cc) of dimethyl phthalate and 100 ml (cc) of t-butanol, adding 35 g of 85% aqueous hydrogen peroxide thereto, and further adding and dissolving 0.0008 mol of sodium salicylate into the resulting mixture.
B-5-2. A composition is prepared by mixing 400 ml (cc) of dimethyl phthalate and 100 ml (cc) of t-butanol, adding 35 g of 85% aqueous hydrogen peroxide thereto, and further adding and dissolving 0.0012 mol of sodium salicylate into the resulting mixture.
B-5-3. A composition is prepared by mixing 400 ml (cc) of dimethyl phthalate and 100 ml (cc) of t-butanol, adding 35 g of 85% aqueous hydrogen peroxide thereto, and further adding and dissolving 0.0016 mol of sodium salicylate into the resulting mixture.

B-5-4. A composition is prepared by mixing 400 ml (cc) of dimethyl phthalate and 100 ml (cc) of t-butanol, adding 35 g of 85% aqueous hydrogen peroxide thereto, and further adding and dissolving 0.0020 mol of sodium salicylate into the resulting mixture.

B-5-5. A composition is prepared by mixing 400 ml (cc) of dimethyl phthalate and 100 ml (cc) of t-butanol, adding 35 g of 85% aqueous hydrogen peroxide thereto, and further adding and dissolving 0.0024 mol of sodium salicylate into the resulting mixture.

B-5-6. A composition is prepared by mixing 400 ml (cc) of dimethyl phthalate and 100 ml (cc) of t-butanol, adding 35 g of 85% aqueous hydrogen peroxide thereto, and further adding and dissolving 0.0028 mol of sodium salicylate into the resulting mixture.

A composition is prepared by adding 0.42 ml of one of Compositions B-5-1 to B-5-6 to Composition A-5, and luminescence is effected.

Table 12

|  | 2 minutes | 15 minutes | 60 minutes | 120 minutes | 180 minutes | 240 minutes | 300 minutes | 360 minutes |
|---|---|---|---|---|---|---|---|---|
| B-5-1 | 174745 | 77387 | 41748 | 31007 | 24185 | 19486 | 16824 | 12355 |
| B-5-2 | 199844 | 95332 | 47625 | 33693 | 26548 | 21767 | 17766 | 13552 |
| B-5-3 | 231744 | 114815 | 65316 | 37277 | 28973 | 22923 | 18335 | 13699 |
| B-5-4 | 217739 | 128242 | 64617 | 41692 | 31136 | 23497 | 18011 | 12910 |
| B-5-5 | 254407 | 125839 | 62353 | 40110 | 32750 | 23490 | 17078 | 10960 |
| B-5-6 | 293951 | 141031 | 68061 | 43391 | 34493 | 24346 | 17108 | 10150 |

Table 13

B-5-1   Luminescence capacity V4 = 128581 mcd/m$^2$/hour
       Luminous efficacy X = 784030 mcd/m$^2$/hour/mol

B-5-2   Luminescence capacity V4 = 145042 mcd/m$^2$/hour
       Luminous efficacy X = 884402 mcd/m$^2$/hour/mol

B-5-3   Luminescence capacity V4 = 163261 mcd/m$^2$/hour
       Luminous efficacy X = 995495 mcd/m$^2$/hour/mol

B-5-4   Luminescence capacity V4 = 179757 mcd/m$^2$/hour
       Luminous efficacy X = 1096079 mcd/m$^2$/hour/mol

B-5-5   Luminescence capacity V4 = 178859 mcd/m$^2$/hour
       Luminous efficacy X = 1090606 mcd/m$^2$/hour/mol

B-5-6   Luminescence capacity V4 = 193631 mcd/m$^2$/hour
       Luminous efficacy X = 1180674 mcd/m$^2$/hour/mol

As described above, for the known Composition A-1 and the Composition B-1, the luminescence capacity V4 is 148330 mcd/m$^2$/hour, and the luminous efficacy X is 927063 mcd/m$^2$/hour/mol. Therefore, as a result, only B-5-6, among these compositions, satisfies the value 192829 mcd/m$^2$/hour which is 30% or more of the luminescence capacity v4.

A suitable catalyst is tetrabutylammonium salicylate (TBAS). The data thereof are as described below.

Compositions

B-6-1. A composition is prepared by mixing 400 ml (cc) of dimethyl phthalate and 100 ml (cc) of t-butanol, adding 35 g of 85% aqueous hydrogen peroxide thereto, and further adding and dissolving 0.0002 mol of TBAS into the resulting mixture.

B-6-2. A composition is prepared by mixing 400 ml (cc) of dimethyl phthalate and 100 ml (cc) of t-butanol, adding 35 g of 85% aqueous hydrogen peroxide thereto, and further adding and dissolving 0.0004 mol of TBAS into the resulting mixture.

B-6-3. A composition is prepared by mixing 400 ml (cc) of dimethyl phthalate and 100 ml (cc) of t-butanol, adding 35 g of 85% aqueous hydrogen peroxide thereto, and further adding and dissolving 0.0006 mol of TBAS into the resulting mixture.

B-6-4. A composition is prepared by mixing 400 ml (cc) of dimethyl phthalate and 100 ml (cc) of t-butanol, adding 35 g of 85% aqueous hydrogen peroxide thereto, and further adding and dissolving 0.0008 mol of TBAS into the resulting mixture.

B-6-5. A composition is prepared by mixing 400 ml (cc) of dimethyl phthalate and 100 ml (cc) of t-butanol, adding 35 g of 85% aqueous hydrogen peroxide thereto, and further adding and dissolving 0.001 mol of TBAS into the resulting mixture.

A composition is prepared by adding 0.42 ml of one of Compositions B-6-1 to B-6-5 to Composition A-5, and luminescence is effected.

Table 14

|  | 2 minutes | 15 minutes | 60 minutes | 120 minutes | 180 minutes | 240 minutes | 300 minutes | 360 minutes |
|---|---|---|---|---|---|---|---|---|
| B-6-1 | 279318 | 97140 | 47273 | 30910 | 23230 | 18478 | 14851 | 12346 |
| B-6-2 | 342705 | 119860 | 56410 | 39802 | 31028 | 25214 | 20913 | 16977 |
| B-6-3 | 310606 | 118544 | 65945 | 41832 | 35901 | 28107 | 20570 | 17614 |
| B-6-4 | 362931 | 137405 | 68318 | 46562 | 34935 | 29195 | 21109 | 15264 |
| B-6-5 | 339719 | 146949 | 78990 | 50050 | 36204 | 28581 | 19294 | 9987 |

Table 15

B-6-1    Luminescence capacity V4 = 138430 mcd/m$^2$/hour
Luminous efficacy X = 844086 mcd/m$^2$/hour/mol

B-6-2    Luminescence capacity V4 = 175744 mcd/m$^2$/hour
Luminous efficacy X = 1071608 mcd/m$^2$/hour/mol

B-6-3    Luminescence capacity V4 = 191337 mcd/m$^2$/hour
Luminous efficacy X = 1166689 mcd/m$^2$/hour/mol

B-6-4    Luminescence capacity V4 = 203467 mcd/m$^2$/hour
Luminous efficacy X = 1240652 mcd/m$^2$/hour/mol

B-6-5    Luminescence capacity V4 = 217240 mcd/m$^2$/hour
Luminous efficacy X = 1324636 mcd/m$^2$/hour/mol

In this experiment, Compositions B-6-4 and B-6-5 containing TBAS within the range of 0.0008 to 0.001 mol were optimum.

Brief Description of the Drawing

Fig. 1 is a diagram for explaining the luminescence capacity and the luminous efficacy of the present invention.
Best Mode for Carrying Out the Invention

The manufacture of the chemiluminescent composition and the luminescent unit of the present invention will be described below.

A solution having a CPPO concentration of 0.32 mol and a 1-cBPEA concentration of 14.8 mM is prepared by adding CPPO and 1-cBPEA to dibutyl phthalate, followed by heating to facilitate dissolution. A breakable glass ampule is filled in with 0.84 ml of the resulting solution and is sealed. Since about 0.2 mol of CPPO is dissolved (saturated solution) into dibutyl phthalate, theoretically, 0.12 mol of crystal is deposited.

A flexible polyethylene pipe with the end closed is filled in with 0.42 ml of solution in which 100 ml (cc) of t-butanol is added to 400 ml (cc) of dimethyl phthalate, 35 g of 85% aqueous hydrogen peroxide is added thereto, and 0.001 mol of TBAS is further added thereto. In addition, the above-described glass ampule is put into the pipe and sealing is conducted.

EXAMPLE 2

A solution having a CPPO concentration of 0.2 mol and a 1-cBPEA concentration of 14.8 mM is prepared by adding CPPO and 1-cBPEA to dibutyl phthalate, followed by heating to facilitate dissolution. The solution is blended with 0.12 mol of CPPO in a solid state. A breakable glass ampule is filled in with 0.84 ml of the resulting solution and is sealed. Thereafter, a luminescent unit is produced as in Example 1. When the luminescent unit is used, the pipe is bent, and the glass ample disposed therein is broken, so that the two components are mixed and a chemiluminescence reaction is started.

When the luminescent unit is stood after the luminescence, crystals or powder are deposited, but the solution portion is emitting light. The intensity of the light is attenuated with the passage of time. However, when the luminescent unit is shaken again after a predetermined time is elapsed, solid CPPO is agitated and is dissolved into the solvent. Consequently, significantly intense light as compared with the light immediately before the shaking is emitted.

For the purpose of long-time luminescence, research on catalysts and research on amounts or types of solvent have been conducted and many inventions have been made. The purpose can be achieved by allowing large amounts of oxalic ester (CPPO) to present while not being dissolved. However, agitation must be conducted by shaking at times, as described above.

Industrial Applicability

In the present invention, the concentration of the oxalic ester in the solution, in which the oxalic ester and the luminescent substance are dissolved, is equal to a concentration of the saturated solution or close to that. When a composition is allowed to be composed of this solution in which the oxalic ester in the solid state is further present, the reduction in chemiluminescence efficiency with an increase in the oxalic ester concentration can be decreased and, thereby, the luminescence capacity can be increased significantly. Consequently, a chemiluminescent composition for significantly increasing the luminance up to about 4 hours from the start of luminescence, that is the time period when the light is most required of event luminescence tools, toy luminescence tools, emergency luminescent tools, and the like, can be provided. Furthermore, for luminescence tools for fishing at night, a luminescent unit which maintains high luminance up to 6 hours can also be provided.

**Claims**

1.   A chemiluminescent composition constituting a system in which chemiluminescence is effected by mixing two types of compositions and comprising
a composition A in which an oxalic ester is present in a solid state in a first solution containing the oxalic ester and a luminescent substance both dissolved therein and
a composition B in which aqueous hydrogen peroxide and a catalyst are dissolved in a second solution,
wherein a portion of the oxalic ester is present in the solid form in composite A at such an amount that at least a portion of the oxalic ester remains in the solid form when the composition A and the composition B are mixed.

2.   The chemiluminescent composition according to claim 1, wherein the luminescent substance is also present in a solid state in the first solution.

3.   The chemiluminescent composition according to Claim 1 or Claim 2, wherein the solid state of at least one of the oxalic ester and the luminescent substance in the composition A takes the shape of granules or small crystals.

4.   The chemiluminescent composition according to Claim 1 or Claim 2, wherein the oxalic ester comprises at least any one of bis(2,4,5-trichloro-6-carbopentoxyphenyl)oxalate and bis(2,4,5-trichloro-6-carboisopentyloxyphenyl)oxalate.

5.   The chemiluminescent composition according to Claim 1 or Claim 2, comprising the composition A in which 0.24 to 0.48 mol/L of bis(2,4,5-trichloro-6-carbopentoxyphenyl)oxalate is added to the first solution containing the dissolved luminescent substance, so that bis(2,4,5-trichloro-6-carbopentoxyphenyl)oxalate is dissolved into the first solution and, in addition, bis(2,4,5-trichloro-6-carbopentoxyphenyl)oxalate is present in the solid state in the first solution while taking the shape of granules or small crystals.

**6.** The chemiluminescent composition according to Claim 1 or Claim 2, comprising the composition A in which about 0.32 mol/L of bis(2,4,5-trichloro-6-carbopentoxyphenyl)oxalate is added to the first solution containing the dissolved luminescent substance, so that bis(2,4,5-trichloro-6-carbopentoxyphenyl)oxalate is dissolved into the first solution and, in addition, bis(2,4,5-trichloro-6-carbopentoxyphenyl)oxalate is present in the solid state in the first solution while taking the shape of granules or small crystals.

**7.** The chemiluminescent composition according to Claim 1 or Claim 2, comprising the composition A in which 0.24 to 0.48 mol/L of bis(2,4,5-trichloro-6-carboisopentyloxyphenyl)oxalate is added to the first solution containing the dissolved luminescent substance, so that bis(2,4,5-trichloro-6-carboisopentyloxyphenyl)oxalate is dissolved into the first solution and, in addition, bis(2,4,5-trichloro-6-carboisopentyloxyphenyl)oxalate is present in the solid state in the first solution while taking the shape of granules or small crystals.

**8.** A chemiluminescent composition system according to claim 1 or 2, wherein the composition A and the composition B are mixed.

### Patentansprüche

**1.** Chemilumineszierende Zusammensetzung bildend ein System in dem Chemilumineszenz bewirkt wird durch Mischen von zwei Typen von Zusammensetzungen und umfassend
eine Zusammensetzung A in der ein Oxalester im Feststoffzustand in einer ersten Lösung vorliegt enthaltend den Oxalester und eine lumineszierende Substanz, welche beide darin gelöst sind, und
eine Zusammensetzung B in der wässriges Wasserstoffperoxid und ein Katalysator in einer zweiten Lösung gelöst sind,
wobei ein Teil des Oxalesters in fester Form in der Zusammensetzung A in solch einer Menge vorliegt, dass mindestens ein Teil des Oxalesters in fester Form verbleibt, wenn die Zusammensetzung A und die Zusammensetzung B gemischt sind.

**2.** Chemilumineszierende Zusammensetzung nach Anspruch 1 wobei die lumineszierende Substanz auch im Feststoffzustand in der ersten Lösung vorliegt.

**3.** Chemilumineszierende Zusammensetzung nach Anspruch 1 oder Anspruch 2, wobei der Feststoffzustand von mindestens einem von dem Oxalester und der lumineszierenden Substanz in der Zusammensetzung A die Form von Granulat oder kleinen Kristallen annimmt.

**4.** Chemilumineszierende Zusammensetzung nach Anspruch 1 oder Anspruch 2, wobei der Oxalester mindestens ein beliebiges von bis(2,4,5-Trichlor-6-carbopentoxyphenyl)oxalat und bis(2,4,5-Trichlor-6-carboisopentyloxyphenyl)oxalat umfasst.

**5.** Chemilumineszierende Zusammensetzung nach Anspruch 1 oder Anspruch 2, umfassend die Zusammensetzung A in der 0,24 bis 0,48 Mol/L von bis(2,4,5-Trichlor-6-carbopentoxyphenyl)oxalat zu der ersten Lösung enthaltend die gelöste lumineszierende Substanz, hinzugefügt ist, so dass bis(2,4,5-Trichlor-6-carbopentoxyphenyl)oxalat in der ersten Lösung gelöst ist, und zusätzlich bis(2,4,5-Trichlor-6-carbopentoxyphenyl)oxalat im Feststoffzustand in der ersten Lösung unter Annahme der Form von Granulat oder kleinen Kristallen vorliegt.

**6.** Chemilumineszierende Zusammensetzung nach Anspruch 1 oder Anspruch 2, umfassend die Zusammensetzung A in der etwa 0,32 Mol/L von bis(2,4,5-Trichlor-6-carbopentoxyphenyl)oxalat zu der ersten Lösung enthaltend die gelöste lumineszierende Substanz hinzugefügt ist, so dass bis(2,4,5-Trichlor-6-carbopentoxyphenyl)oxalat in der ersten Lösung gelöst ist, und zusätzlich bis(2,4,5-Trichlor-6-carbopentoxyphenyl)oxalat im Feststoffzustand in der ersten Lösung unter Annahme der Form von Granulat oder kleinen Kristallen vorliegt.

**7.** Chemilumineszierende Zusammensetzung nach Anspruch 1 oder Anspruch 2, umfassend die Zusammensetzung A in der 0,24 bis 0,48 Mol/L von bis(2,4,5-Trichlor-6-carboisopentyloxyphenyl)oxalat zu der ersten Lösung enthaltend die gelöste lumineszierende Substanz hinzugefügt ist, so dass bis(2,4,5-Trichlor-6-carboisopentyloxyphenyl)oxalat in der ersten Lösung gelöst ist und zusätzlich bis(2,4,5-Trichlor-6-carboisopentyloxyphenyl)oxalat im Feststoffzustand in der ersten Lösung unter Annahme der Form von Granulat oder kleinen Kristallen vorliegt.

**8.** Chemilumineszierendes Zusammensetzung-System gemäß Anspruch 1 oder 2, wobei die Zusammensetzung A und die Zusammensetzung B gemischt sind.

**Revendications**

1. Composition chimioluminescente constituant un système dans lequel une chimioluminescence est réalisée en mélangeant deux types de compositions et comprenant
une composition A dans laquelle un ester oxalique est présent à l'état solide dans une première solution contenant l'ester oxalique et une substance luminescente tous deux dissous dans celle-ci, et
une composition B dans laquelle du peroxyde d'hydrogène aqueux et un catalyseur sont dissous dans une deuxième solution,
dans laquelle une partie de l'ester oxalique est présente sous forme solide dans le composite A à hauteur d'une quantité telle qu'au moins une partie de l'ester oxalique reste sous forme solide lorsque la composition A et la composition B sont mélangées.

2. Composition chimioluminescente selon la revendication 1, dans laquelle la substance luminescente est également présente à l'état solide dans la première solution.

3. Composition chimioluminescente selon la revendication 1 ou la revendication 2, dans laquelle l'état solide d'au moins un parmi l'ester oxalique et la substance luminescente dans la composition A prend la forme de granules ou de petits cristaux.

4. Composition chimioluminescente selon la revendication 1 ou la revendication 2, dans laquelle l'ester oxalique comprend au moins un parmi un bis(2,4,5-trichloro-6-carbopentoxyphényl)oxalate et un bis(2,4,5-trichloro-6-carboisopentyloxyphényl)oxalate.

5. Composition chimioluminescente selon la revendication 1 ou la revendication 2, comprenant la composition A dans laquelle 0,24 à 0,48 mole/l de bis(2,4,5-trichloro-6-carbopentoxyphényl)oxalate est ajoutée à la première solution contenant la substance luminescente dissoute, de sorte que le bis(2,4,5-trichloro-6-carbopentoxyphényl)oxalate est dissous dans la première solution et, de plus, le bis(2,4,5-trichloro-6-carbopentoxyphényl)oxalate est présent à l'état solide dans la première solution tout en prenant la forme de granules ou de petits cristaux.

6. Composition chimioluminescente selon la revendication 1 ou la revendication 2, comprenant la composition A dans laquelle environ 0,32 mole/l de bis(2,4,5-trichloro-6-carbopentoxyphényl)oxalate est ajoutée à la première solution contenant la substance luminescente dissoute, de sorte que le bis(2,4,5-trichloro-6-carbopentoxyphényl)oxalate est dissous dans la première solution et, de plus, le bis(2,4,5-trichloro-6-carbopentoxyphényl)oxalate est présent à l'état solide dans la première solution tout en prenant la forme de granules ou de petits cristaux.

7. Composition chimioluminescente selon la revendication 1 ou la revendication 2, comprenant la composition A dans laquelle 0,24 à 0,48 mole/l de bis(2,4,5-trichloro-6-carboisopentyloxyphényl)oxalate est ajoutée à la première solution contenant la substance luminescente dissoute, de sorte que le bis(2,4,5-trichloro-6-carboisopentyloxyphényl)oxalate est dissous dans la première solution et, de plus, le bis(2,4,5-trichloro- 6-carboisopentyloxyphényl)oxalate est présent à l'état solide dans la première solution tout en prenant la forme de granules ou de petits cristaux.

8. Système de composition chimioluminescente selon la revendication 1 ou 2, dans lequel la composition A et la composition B sont mélangées.

# FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 53047798 A
- US 3749679 A
- US 3701738 A
- US 3893938 A